(19) Europäisches Patentamt
European Patent Office
Office européen des brevets

(11) Publication number: **0 089 825**
**B1**

(12) # EUROPEAN PATENT SPECIFICATION

(45) Date of publication of patent specification: **29.04.87**

(51) Int. Cl.[4]: **C 10 G 71/04,** B 01 J 29/28

(21) Application number: **83301511.8**

(22) Date of filing: **18.03.83**

(54) **Process for converting olefins to high viscosity index lubricants using large crystal zeolites.**

(30) Priority: **19.03.82 US 359964**

(43) Date of publication of application:
**28.09.83 Bulletin 83/39**

(45) Publication of the grant of the patent:
**29.04.87 Bulletin 87/18**

(84) Designated Contracting States:
**BE DE FR GB IT NL**

(56) References cited:
**EP-A-0 021 674**
**US-A-3 322 848**
**US-A-4 126 644**
**US-A-4 176 050**

(73) Proprietor: **MOBIL OIL CORPORATION**
**150 East 42nd Street**
**New York New York 10017 (US)**

(72) Inventor: **Chester, Arthur Warren**
**517 Country Club Drive**
**Cherry Hill, NJ 08003 (US)**
Inventor: **Garwood, William Everett**
**125 Warwick Road**
**Haddonfield, NJ 08033 (US)**
Inventor: **Schwartz, Albert B.**
**1901 John F. Kennedy Blvd., Apt. 1204**
**Philadelphia, PA 19103 (US)**

(74) Representative: **Cooper, John Anthony et al**
**Mobil Court 3 Clements Inn**
**London WC2A 2EB (GB)**

**EP 0 089 825 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to the manufacture of lubricating oils derived from the conversion of olefins over a zeolite catalyst, in a particular ZSM—5 type zeolite catalyst characterized by large crystals to obtain a lubricating oil of low pour point and high V.I.

The present invention provides a process for the production of lubricating oils from olefins wherein olefins are contacted over a ZSM—5 type zeolite catalyst at elevated temperatures and pressures in order to obtain a liquid product from which lubricating oils boiling above 316°C (600°F) are separated, characterized in that the catalyst is a macrocrystalline ZSM—5 type zeolite catalyst.

The conversion of olefins over ZSM—5 type zeolites is extremely well known in the art. United States Patent No. 4,227,992 as well as the patents mentioned therein are excellent examples of this prior art.

United States Patent No. 4,126,644 discloses the conversion of a $C_5$—204°C (400°F) liquid fraction from a Fischer-Tropsch synthesis, predominantly $C_5$—$C_{10}$ olefins over zeolite ZSM—5 in order to produce higher boiling products, including a 343°C+ (650°F+) lubricating fraction.

United States Patent No. 3,322,848 is directed towards the manufacture of high viscosity index, (V.I.), low pour point lubricating oils from $C_{10}$—$C_{18}$ normal alpha olefins by processing over crystalline aluminosilicate zeolites other than those of the ZSM—5 type.

It has now been found that the viscosity index of lubricating oils produced from olefins such as propylene, over a ZSM—5 type zeolite catalyst, preferably fresh hydrogen ZSM—5, varies inversely with the crystal size of the zeolite. V.I. is the highest over a catalyst comprising a ZSM—5 type zeolite which has a crystal size greater than 2 μm, intermediate over a 0.1—0.5 μm size and lowest over a 0.02—0.05 μm crystal size. Thus, the essential feature of the conversion of olefins according to this invention resides in the use of a catalyst comprising a ZSM—5 type zeolite, preferably HZSM—5, having large crystals, i.e. greater than 2 μm (hereinafter referred to as "macrocrystalline ZSM—5 type") to obtain a lubricating oil fraction which has an enhanced viscosity index.

Macrocrystalline ZSM—5 type zeolites are known in the art to have been used as catalysts in dewaxing operations; see United States Patent No. 4,176,050. The process of this invention is directed towards using the same zeolites disclosed in United States Patent No. 4,176,050 in order to produce lubricating oils by converting olefins, preferably $C_3$—$C_{28}$ olefins at elevated temperatures and pressures in order to obtain a liquid product, thereafter distilling the liquid product to obtain a lubricating oil fraction (i.e. one which generally boils above 316°C (600°F)) having an enhanced viscosity index. The process of this invention is carried out at temperatures ranging from 177° to 343°C (350°F to 650°F) at pressures ranging from 6996 to 13890 kPa (1000 to 2000 psig) and at space velocities ranging from 0.1 to 10 WHSV and, preferably, from 0.2 to 2 WHSV.

The macrocrystalline ZSM—5 type zeolite utilized herein has a predominant crystal size of at least two μm, that is, at least 50 weight percent of the crystals and, preferably, at least 70 weight percent of the crystals have a crystallite size in the range of from 2 to 10 μm.

The crystalline zeolites utilized herein are members of a class of zeolitic materials which exhibit unusual properties. Although these zeolites have unusually low alumina contents, i.e. high silica to alumina mole ratios, they are very active even when the silica to alumina mole ratio exceeds 30. The activity is surprising since catalytic activity is generally attributed to framework alumina atoms and/or cations associated with these aluminum atoms. These zeolites retain their crystallinity for long periods in spite of the presence of steam at high temperature which induces irreversible collapse of the framework of other zeolites, e.g. of the X and A type. Furthermore, carbonaceous deposits, when formed, may be removed by burning at higher than usual temperatures to restore activity. These zeolites, used as catalysts, generally have low coke-forming activity and therefore are conductive to long times on stream between regenerations by burning carbonaceous deposits with oxygen-containing gas such as air.

An important characteristic of the crystal structure of this class of zeolites is that it provides a selective constrained access to and egress from the intracrystalline free space by virtue of having an effective pore size intermediate between the small pore Linde A and the large pore Linde X, i.e. the pore windows of the structure are of about a size such as would be provided by 10-membered rings of silicon atoms interconnected by oxygen atoms. It is to be understood, of course, that these rings are those formed by the regular disposition of the tetrahydra making up the anionic framework of the crystalline zeolite, the oxygen atoms themselves being bonded to the silicon (or aluminum, etc.) atoms at the centers of the tetrahydra.

The silica to alumina mole ratio referred to may be determined by conventional analysis. This ratio is meant to represent, as closely as possible, the ratio in the rigid anionic framework of the zeolite crystal and to exclude aluminum in the binder or in cationic or other form within the channels. Although zeolites with silica to alumina mole ratios of at least 12 are useful, it is preferred in some instances to use zeolites having substantially higher silica/alumina ratios, e.g. 1600 and above. In addition, zeolites as otherwise characterized herein but which are substantially free of aluminum, that is zeolites having silica to alumina mole ratios of up to infinity, are found to be useful and even preferable in some instances. Such "high silica" or "highly siliceous" zeolites are intended to be included within this description. Also included within this definition are substantially pure silica analogs of the useful zeolites described herein, that is to say those zeolites having no measurable amount of aluminum (silica to alumina mole ratio of infinity) but which otherwise embody the characteristics disclosed.

This class of zeolites, after activation, acquires an intracrystalline sorption capacity for normal hexene which is greater than that for water, i.e. they exhibit "hydrophobic" properties. This hydrophobic character can be used to advantage in some applications.

The class of zeolites useful herein have an effective pore size such as to freely sorb normal hexene. In addition, the structure must provide constrained access to larger molecules. It is sometimes possible to judge from a known crystal structure whether such constrained access exists. For example, if the only pore windows in a crystal are formed by 8-membered rings of silicon and aluminum atoms, then access by molecules of larger cross-section than normal hexene is excluded and the zeolite is not of the desired type. Windows of 1-membered rings are preferred, although in some instances excessive puckering of the rings or pore blockage may render these zeolites ineffective.

Although 12-membered rings theory would not offer sufficient constraint to produce advantageous conversions, it is noted that the puckering 12-ring structure of TMA offretite does show some constrained access. Other 12-ring structures may exist which may be operative for other reasons and, therefore, it is not the present intention to entirely judge the usefulness of a particular zeolite solely from theoretical structural considerations.

Rather than attempt to judge from crystal structure whether or not a zeolite possesses the necessary constrained access to molecules of larger cross-section than normal paraffins, a simple determination of the "Constraint Index" as herein defined may be made by passing continuously a mixture of an equal weight of normal hexene and 3-methylpentane over a sample of zeolite at atmospheric pressure according to the following procedure. A sample of the zeolite, in the form of pellets or extrudate, is crushed to a particle size about that of coarse sand and mounted in a glass tube. Prior to testing, the zeolite is treated with a stream of air at 540°C for at least 15 minutes. The zeolite is then flushed with helium and the temperature is adjusted between 290°C and 510°C to give an overall conversion of between 10% and 60%. The mixture of hydrocarbons is passed at 1 liquid hourly space velocity (i.e., 1 volume of liquid hydrocarbon per volume of zeolite per hour) over the zeolite with a helium dilution to give a helium to (total) hydrocarbon mole ratio of 4:1. After 20 minutes on stream, a sample of the effluent is taken and analyzed, most conveniently by gas chromatography, to determine the fraction remaining unchanged for each of the two hydrocarbons.

While the above experimental procedure will enable one to achieve the desired overall conversion of 10 to 60% for most zeolite samples and represents preferred conditions, it may occasionally be necessary to use somewhat more severe conditions for samples of very low activity, such as those having an exceptionally high silica to alumina mole ratio. In those instances, a temperature of up to 540°C and a liquid hourly space velocity of less than one, such as 0.1 or less, can be employed in order to achieve a minimum total conversion of about 10%.

The "Constraint Index" is calculated as follows:

$$\text{Constraint Index} = \frac{\log_{10}\text{(fraction of hexene remaining)}}{\log_{10}\text{(fraction of 3-methylpentane remaining)}}$$

The Constraint Index approximates the ratio of the cracking rate constants for the two hydrocarbons. Zeolites suitable for the present invention are those having a Constraint Index of 1 to 12.

Constraint Index (CI) values for some typical materials are:

| | C.I. |
|---|---|
| ZSM—4 | 0.5 |
| ZSM—5 | 8.3 |
| ZSM—11 | 8.7 |
| ZSM—12 | 2 |
| ZSM—23 | 9.1 |
| ZSM—35 | 4.5 |
| ZSM—38 | 2 |
| ZSM—48 | 3.4 |
| TMA Offretite | 3.7 |
| Clinoptilolite | 3.4 |

| | C.I. |
|---|---|
| Beta | 0.6 |
| H—Zeolon (mordenite) | 0.4 |
| REY | 0.4 |
| Amorphous Silica-Alumina | 0.6 |
| Erionite | 38 |

The above-described Constraint Index is an important and even critical definition of those zeolites which are useful in the instant invention. The very nature of this parameter and the recited technique by which it is determined, however, admit of the possibility that a given zeolite can be tested under somewhat different conditions and thereby exhibit different Constraint Indices. Constraint Index seems to vary somewhat with severity of operation (conversion) and the presence or absence of binders. Likewise, other variables such as crystal size of the zeolite, the presence of occluded contaminants, etc., may affect the constraint index. Therefore, it will be appreciated that it may be possible to so select test conditions as to establish more than one value in the range of 1 to 12 for the Constraint Index of a particular zeolite. Such a zeolite exhibits the constrained access as herein defined and is to be regarded as having a Constraint Index in the range of 1 to 12. Also contemplated herein as having a Constraint Index in the range of 1 to 12 and therefore within the scope of the defined novel class of highly siliceous zeolites are those zeolites which, when tested under two or more sets of conditions within the above-specified ranges of temperature and conversion, produce a value of the Constraint Index slightly less than 1, e.g. 0.9, or somewhat greater than 12, e.g. 14 or 15, with at least one other value within the range of 1 to 12. Thus, it should be understood that the Constraint Index value as used herein is an inclusive rather than an exclusive value. That is, a crystalline zeolite when identified by any combination of conditions within the testing definition set forth herein as having a Constraint Index in the range of 1 to 12 is intended to be included in the instant novel zeolite definition whether or not the same identical zeolite, when tested under other of the defined conditions, may give a Constraint Index value outside of the range of 1 to 12.

The class of zeolites defined herein as of the ZSM—5 type is exemplified by ZSM—5, ZSM—11, ZSM—12, ZSM—23, ZSM—35, ZSM—38, ZSM—48, and other similar materials.

ZSM—5 is described and its X-ray diffraction pattern set out in U.S. Patent No. 3,702,886 and Reissue 29,948, ZSM—11 in U.S. Patent No. 3,709,979, ZSM—12 in U.S. Patent No. 3,832,449, ZSM—23 in U.S. Patent No. 4,076,842, ZSM—35 in U.S. Patent No. 4,016,245 and ZSM—38 in U.S. Patent No. 4,046,859.

ZSM—48 can be identified, in terms of moles of anhydrous oxides per 100 moles of silica, as follows:

$$(0\text{—}15)RN:(0\text{—}1.5)M_{2/n}O:(0.2)Al_2O_3:(100)SiO_2$$

wherein:

M is at least one cation having a valence n; and

RN is a $C_1$—$C_{20}$ organic compound having at least one amine functional group of $pK_a \geqq 7$.

It is recognized that, particularly when the composition contains tetrahedral framework aluminum, a fraction of the amine functional groups may be protonated. The doubly protonated form, in conventional notation, would be $(RNH)_2O$ and is equivalent in stoichiemetry to 2 RN + $H_2O$.

The characteristic X-ray diffraction pattern of the synthetic zeolite ZSM—48 has the following significant lines:

Characteristic Lines of ZSM—48

| d ($10^{-10}$ m) | Relative Intensity |
|---|---|
| 11.9 | W—S |
| 10.2 | W |
| 7.2 | W |
| 5.9 | W |
| 4.2 | VS |
| 3.9 | VS |
| 3.6 | W |
| 2.85 | W |

These values were determined by standard techniques. The radiation was the K-alpha doublet of copper, and a scintillation counter spectrometer with a strip chart pen recorder was used. The peak heights, I, and the positions as a function of 2 times theta, where theta is the Bragg angle, were read from the spectrometer chart. From these, the relative intensities, 100 $I/I_o$, where $I_o$ is the intensity of the strongest line or peak, and d (obs.), the interplanar spacing, corresponding to the recorded lines, were calculated. In the foregoing table the relative intensities are given in terms of the symbols W = weak, VS = very strong and W—S = weak-to-strong. Ion exchange of the sodium ion with cations reveals substantially the same pattern with some minor shifts in interplanar spacing and variation in the relative intensity. Other minor variations can occur depending on the silicon to aluminum ratio of the particular sample, as well as if it has been subjected to thermal treatment.

The ZSM—48 can be prepared from a reaction mixture containing a source of silica, water, RN, an alkali metal oxide (e.g. sodium) and optionally alumina. The reaction mixture should have a composition, in terms of mole ratios of oxides, falling within the following ranges:

| REACTANTS | | BROAD | PREFERRED |
|---|---|---|---|
| $Al_2O_3/SiO_2$ | = | 0 to 0.02 | 0 to 0.01 |
| $Na/SiO_2$ | = | 0 to 2 | 0.1 to 1.0 |
| $RN/SiO_2$ | = | 0.01 to 2.0 | 0.05 to 1.0 |
| $OH^-/SiO_2$ | = | 0 to 0.25 | 0 to 0.1 |
| $H_2O/SiO_2$ | = | 10 to 100 | 20 to 70 |
| $H^+$(added)$SiO_2$ | = | 0 to 0.2 | 0 to 0.05 |

wherein RN is a $C_1$—$C_{20}$ organic compound having amine functional group of $pK_a \geqq 7$. The mixture is maintained at 80—250°C until crystals of the material are formed. $H^+$(added) is moles acid added in excess of the moles of hydroxide added. In calculating $H^+$(added) and OH values, the term acid ($H^+$) includes both hydronium ion, whether free or coordinated, and aluminum. Thus aluminum sulfate, for example, would be considered a mixture of aluminum oxide, sulfuric acid, and water. An amine hydrochloride would be a mixture of amine and HCl. In preparing the highly siliceous form of ZSM—48 no alumina is added. Thus, the only aluminum present occurs as an impurity in the reactants.

Preferably, crystallization is carried out under pressure in an autoclave or static bomb reactor, at 80°C to 250°C. Thereafter, the crystals are separated from the liquid and recovered. The composition can be prepared utilizing materials which supply the appropriate oxide. Such compositions include sodium silicate, silica hydrosol, silica gel, silicic acid, RN, sodium hydroxide, sodium chloride, aluminum sulfate, sodium aluminate, aluminum oxide, or aluminum itself. RN is $C_1$—$C_{20}$ organic compound containing at least one amine functional group of $pK_a \geqq 7$, as defined above, and includes such compounds as $C_3$—$C_{18}$ primary, secondary, and tertiary amines, cyclic amine (such as piperdine, pyrrolidine and piperazine), and polyamines such as $NH_2$—$C_nH_{2n}$—$NH_2$ wherein n is 4—12.

The macrocrystalline ZSM—5 utilized in this invention has essentially the same x-ray diffraction pattern as noted in U.S. Patent No. 3,702,886. Each of the other ZSM—5 type catalysts used in the present invention has the same x-ray diffraction pattern as noted in the respective patents mentioned above.

It is to be understood that it is intended that identification of the above-mentioned crystalline zeolites is to be resolved on the basis of their respective X-ray diffraction patterns. The present invention contemplates utilization of such catalysts where the mole ratio of silica to alumina is essentially unbounded. Mention of the above-identified patents should therefore not be construed as limiting the disclosed crystalline zeolites to those having the specific silica-alumina mole ratios discussed therein, it now being known that such zeolites may be substantially aluminum-free and yet, having the same crystal structure as the disclosed materials, may be useful or even preferred in some applications. It is the crystal structure, as identified by the X-ray diffraction "fingerprint", which establishes the identity of the specific crystalline zeolite material.

The specific zeolites described, when prepared in the presence of organic cations, are substantially catalytically inactive, possibly because the inter-crystalline free space is occupied by organic cations from the forming solution. They may be activated by heating in an inert atmosphere at 540°C for one hour, for example, followed by base exchange with ammonium salts followed by calcination at 540°C in air. The presence of organic cations in the forming solution may not be absolutely essential to the formation of this type zeolite; however, the presence of these cations does appear to favor the formation of this special class of zeolite. More generally, it is desirable to activate this type catalyst by base exchange with ammonium salts followed by calcination in air at about 540°C for from about 15 minutes to about 24 hours.

Natural zeolites may sometimes be converted to zeolite structures of the class herein identified by various activation procedures and other treatments such as base exchange, steaming, alumina extraction

and calcination, alone or in combinations. Natural minerals which may be so treated include, ferrierite, brewsterite, stilbite, dachiardite, epistilbite, heulandite, and clinoptilolite.

The preferred crystalline zeolites for utilization herein include ZSM—5, ZSM—11, ZSM—12, ZSM—23, ZSM—35, ZSM—38 and ZSM—48, with ZSM—5 being particularly preferred.

In a preferred aspect of this invention, the zeolites selected are those providing among other things a crystal framework density, in the dry hydrogen form, of not less than about 1.6 grams per cubic centimeter. It has been found that zeolites which satisfy all three of the discussed criteria are most desired for several reasons. Therefore, the preferred zeolites useful with respect to this invention are those having a Constraint Index as defined above of about 1 to about 12, a silica to alumina mole ratio of at least about 12 and a dried crystal density of not less than about 1.6 grams per cubic centimeter. The dry density for known structures may be calculated from the number of silicon plus aluminum atoms per 1000 cubic Angstroms (1 Angstrom = $10^{-10}$m), as given, e.g., on Page 19 of the article ZEOLITE STRUCTURE by W. M. Meier, PROCEEDINGS OF THE CONFERENCE ON MOLECULAR SIEVES, (London, April 1967) published by the Society of Chemical Industry, London, 1968.

When the crystal structure is unknown, the crystal framework density may be determined by classical pycnometer techniques. For example, it may be determined by immersing the dry hydrogen form of the zeolite in an organic solvent which is not sorbed by the crystal. Or, the crystal density may be determined by mercury porosimetry, since mercury will fill the interstices between crystals but will not penetrate the intracrystalline free space.

It is possible that the unusual sustained activity and stability of this special class of zeolites is associated with its high crystal anionic framework density of not less than about 1.6 grams per cubic centimeter. This high density must necessarily be associated with a relatively small amount of free space within the crystal, which might be expected to result in more stable structures. This free space, however, is important as the locus of catalytic activity.

Crystal framework densities of some typical zeolites, including some which are not within the purview of this invention, are:

| | Void Volume | Framework Density |
|---|---|---|
| Ferrierite | 0.28 $cm^3/cm^3$ | 1.76 $g/cm^3$ |
| Mordenite | .28 | 1.7 |
| ZSM—5, —11 | .29 | 1.79 |
| ZSM—12 | — | 1.8 |
| ZSM—23 | — | 2.0 |
| Dachiardite | .32 | 1.72 |
| L | .32 | 1.61 |
| Clinoptilolite | .34 | 1.71 |
| Laumontite | .34 | 1.77 |
| ZSM—4 (Omega) | .38 | 1.65 |
| Heulandite | .39 | 1.69 |
| P | .41 | 1.57 |
| Offretite | .40 | 1.55 |
| Levynite | .40 | 1.54 |
| Erionite | .35 | 1.51 |
| Gmelinite | .44 | 1.46 |
| Chabazite | .47 | 1.45 |
| A | .5 | 1.3 |
| Y | .48 | 1.27 |

The macrocrystalline ZSM—5 type catalyst used in the present invention, preferably, is at least partially in the hydrogen form. The original cations associated therewith may be replaced by a wide variety of other cations according to techniques well known in the art. Typical replacing cations will include hydrogen, ammonium, and metal cations, including mixtures of the same. Of the replacing metallic cations, particular preference is given to cations of metals such as rare earth metals, manganese, calcium, as well as metals of Group II of the Periodic Table.

Typical ion exchange techniques would be to contact a particular ZSM—5 zeolite with a salt of the desired replacing cation or cations. Although a wide variety of salts can be employed, particular preference is given to chlorides, nitrates, and sulfates.

Representative ion exchange techniques are disclosed in the art, including United States Patent Nos. 3,140,249, 3,140,251 and 3,140,253.

It may be useful to incorporate the above-described crystalline zeolite with a matrix comprising another material resistant to the temperature and other conditions employed in the process. Such matrix material is useful as a binder and imparts greater resistance to the catalyst.

Useful matrix materials include both synthetic and naturally occurring substances, as well as inorganic materials such as clay, silica and/or metal oxides. The latter may be either naturally occurring or in the form of gelatinous precipitates or gels including mixtures of silica and metal oxides. Naturally occurring clays which can be composited with the zeolite include those of the monmorillonite and kaolin families, which families include the sub-bentonites and the kaolins commonly known as Dixie, McNamee-Georgia and Florida clays or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, the zeolites employed herein may be composited with a porous matrix material, such as alumina, silica-alumina, magnesia, silica-zirconia, silica-thoria, silica-beryllia, and silica-titania, as well as ternary compositions, such as silica-alumina-thoria, silica-alumina-zirconia, silica-alumina-magnesia and silica-magnesia-zirconia. The matrix may be in the form of a cogel. The relative proportions of zeolite component and inorganic oxide gel matrix, on an anhydrous basis, may vary widely with the zeolite content ranging from 1 to 99 percent by weight and more usually, from 5 to 80 percent by weight of the dry composite. The preferred matrix is alumina.

The following examples illustrate the process of this invention.

Examples 1 to 3

Examples 1 to 34 were all made with a propylene charge at 10443 kPa (1500 psig), 0.5 WHSV, charging the propylene as a liquid continuously with a positive displacement pump into a high pressure fixed bed unit. The catalysts were all 70:1 silica-to-alumina ratio HZSM—5 extruded with 35% alumina binder. The catalyst bed in each example was purged in situ with hydrogen at 482°C (900°F), at atmospheric pressure for one hour to ensure a standard dry condition before introduction of the propylene.

Example 1

>2 µm HZSM—5

Propylene was charged over this large crystal size zeolite for a total of four days, the first two at 204°C (400°F) and the second two at 232°C (450°F). Liquid recovery was 93 weight percent. Distillation of the liquid product gave 10 weight percent lubrication oil fraction (based on propylene charge) boiling above ~316°C (600°F) having the following properties:

| | |
|---|---|
| Gravity, °API | 41.3 |
| Specific | 0.8189 |
| Pour Point, °C (°F) | <−57 (<−70) |
| K.V. @ 40°C, $mm^2/s$ | 6.21 |
| K.V. @ 200°C, $mm^2/s$ | 2.02 |
| V.I. | 122 |

Example 2

0.1—0.5 µm HZSM—5

Propylene was charged over this intermediate crystal size zeolite for a total of four days, the first two again at 204°C (400°F) and the second two at 232°C (450°F). Liquid recovery was 97 weight percent. Distillation of the liquid product gave 12 weight percent lubricating oil fraction (based on propylene charge) boiling above 316°C ~(600°F) having the following properties:

| | |
|---|---|
| Gravity, °API | 40.3 |
| Specific | 0.8236 |
| Pour Point, °C (°F) | <−57 (<−70) |
| K.V. @ 40°C, $mm^2/s$ | 10.19 |
| K.V. @ 100°C, $mm^2/s$ | 2.66 |
| V.I. | 93 |

Example 3

0.02—0.05 µm HZSM—5

Propylene was charged over this small crystal size zeolite for a total of three days, the first two 204°C (400°F) and the third at 232°C (450°F). Liquid recovery was 96 weight percent. Distillation of the liquid product gave 10 weight percent lubricating oil fraction (based on propylene charge) boiling above ~343°C (650°F) having the following properties:

| | |
|---|---|
| Gravity, °API | 33.3 |
| Specific | 0.8587 |
| Pour Point, °C (°F) | −34 (−30) |
| K.V. @ 40°C, $mm^2/s$ | 56.35 |
| K.V. @ 100°C, $mm^2/s$ | 6.93 |
| V.I. | 70 |

As can be seen from the above examples, the viscosity index of the lube was the best with the macrocrystalline ZSM—5 of Example 1 and the viscosity index diminished as the crystallite size diminished.

Example 4

This example was carried out using an alumina binder alone without any ZSM—5. Propylene was charged over the alumina binder alone for two days, the first at 204°C (400°F) and the second at 232°C (450°F). Liquid recovery was 7 weight percent. Less than 1 percent (based on propylene charge) boiled above 316°C (600°F). This example shows that the binder used in making the ZSM—5 extrudates has essentially no activity for making lubricating oil.

**Claims**

1. A process for the production of lubricating oils from olefins wherein olefins are contacted with a catalyst comprising a ZSM—5 type zeolite at elevated temperatures and pressures in order to obtain a liquid product from which lubricating oils boiling above 316°C (600°F) are separated, characterized in that the olefin is contacted with a catalyst comprising a macrocrystalline ZSM—5 type zeolite having a crystallite size greater than 2 µm, at a temperature of 177 to 343°C (350 to 650°F), a pressure of 6996 to 13890 kPa (1000 to 2000 psig) and a space velocity of 0.1 to 10 WHSV.

2. A process according to claim 1, wherein the ZSM—5 type zeolite is ZSM—5, ZSM—11, ZSM—12, ZSM—23, ZSM—35, ZSM—38 or ZSM—48.

3. A process according to claim 1 or claim 2, wherein at least 50 weight percent of the crystals have a crystallite size in the range of 2—10 µm.

4. A process according to claim 3, wherein at least 70 weight percent of the crystals have a crystallite size in the range of 2—10 µm.

5. A process according to any one of claims 1 to 4, wherein the macrocrystalline ZSM—5 type zeolite is the hydrogen form.

6. A process according to any one of claims 1 to 5, wherein the catalyst is a fresh catalyst.

**Patentansprüche**

1. Verfahren zur Herstellung von Schmierölen aus Olefinen, bei dem die Olefinen mit einem Katalysator, der einen Zeolith vom Typ ZSM—5 umfaßt, bei erhöhter Temperatur und Druck in Kontakt gebracht werden, um ein flüssiges Produkt zu erhalten, von dem die Schmieröle, die oberhalb 316°C (600°F) sieden, abgetrennt werden, dadurch gekennzeichnet daß das Olefin mit einem Katalysator, der einen

makro-kristallinen Zeolith vom Typ ZSM—5 mit einer Kristallitgröße größer als 2 µm umfaßt, bei einer Temperatur von 175 bis 343°C (350 bis 650°F), einem Druck von 6996 bis 13890 kPa (1000 bis 2000 psig) und einer Raumgeschwindigkeit von 0,1 bis 10 WHSV in Kontakt gebracht wird.

2. Verfahren nach Anspruch 1, worin der Zeolith vom Typ ZSM—5 ZSM—5, ZSM—11, ZSM—12, ZSM—23, ZSM—35, ZSM—38 oder ZSM—48 ist.

3. Verfahren nach Anspruch 1 oder 2, worin mindestens 50 Gew.-% der Kristalle eine Kristallitgröße im Bereich von 2 bis 10 µm haben.

4. Verfahren nach Anspruch 3, worin mindestens 70 Gew.-% der Kristalle eine Kristallitgröße im bereich von 2 bis 10 µm haben.

5. Verfahren nach einem der Ansprüche 1 bis 4, worin der makro-kristalline Zeolith vom Typ ZSM—5 in der Wasserstofform vorliegt.

6. Verfahren nach einem der Ansprüche 1 bis 5, worin der Katalysator ein frischer Katalysator ist.

**Revendications**

1. Un procédé de production d'huiles lubrifiantes à partir d'oléfines dans lequel les oléfines sont mises au contact d'un catalyseur comprenant une zéolite de type ZSM—5, à température et pression élevées, de manière à obtenir un produit liquide dont on sépare les huiles lubrifiantes bouillant au-dessus de 316°C (600°F), caractérisé en ce que l'oléfine est mise au contact d'un catalyseur comprenant une zéolite macrocristalline du type ZSM—5, présentant une dimension de cristallite supérieure à 2 µm, à une température variant entre 177° et 343°C (350 et 650°F), une pression de 6996 à 13890 kPa (1000 à 2000 psig) et une vitesse spatiale de 0,1 à 10 VSHP.

2. Un procédé selon la revendications 1, dans lequel la zéolite de type ZSM—5 est la ZSM—5, la ZSM—11, la ZSM—12, la ZSM—23, la ZSM—35, la ZSM—38 ou la ZSM—48.

3. Un procédé selon la revendication 1 ou 2, dans lequel au moins 50% en poids des cristaux présentent une dimension de cristallite comprise entre 2 et 10 µm.

4. Un procédé selon la revendication 3, dans lequel 70% en poids au moins des cristaux présentent une dimension de cristallite comprise entre 2 et 10 µm.

5. Un procédé selon l'une quelconque des revendications 1 à 4, dans lequel la zéolite macrocrystalline de type ZSM—5 est sous forme protonée.

6. Un procédé selon l'une quelconque des revendications 1 à 5, dans lequel le catalyseur est un catalyseur frais.